Europäisches Patentamt

European Patent Office

Office européen des brevets

(11) Publication number: **0 0 1 5 3 3 2**
A1

## (12) EUROPEAN PATENT APPLICATION·

(21) Application number: **79300344.3**

(51) Int. Cl.³: **G 08 B 3/10,** B 60 Q 9/00

(22) Date of filing: **07.03.79**

(43) Date of publication of application: **17.09.80**
**Bulletin 80/19**

(71) Applicant: **Ho, Chi Chen, No. 19, Sec. 1, Chung Hsin Road, San Chung City Taipei Hsien (TW)**

(72) Inventor: **Ho, Chi Chen, No. 19, Sec. 1, Chung Hsin Road, San Chung City Taipei Hsien (TW)**

(74) Representative: **Harrison, David Christopher et al, MEWBURN ELLIS & CO 70 & 72 Chancery Lane, London WC2A 1AD (GB)**

(84) Designated Contracting States: **BE DE FR GB IT SE**

(54) **Audible warning equipment in and for a road vehicle.**

(57) Audible warning for a driver of a road vehicle of the presence of another vehicle in the vicinity is provided by a microphone (d) on the outside of his vehicle (a) and an audio amplifier and loudspeaker (e) inside it. The amplifier can be set to transmit only signals above a given level (i.e. originating only from close vehicles or those which are hooting).

EP 0 015 332 A1

- 1 -

## AUDIBLE WARNING EQUIPMENT IN AND FOR A ROAD VEHICLE

This invention relates to audible warning equipment in a road vehicle.

The sound insulation of road vehicles is increasingly efficient, and especially when heaters or an air-conditioning system is being used inside the vehicle, all the windows have to be closed for best performance. However, when windows are closed, substantially all the external noise is cut off. The absence of aural awareness of nearby vehicles, especially if they are hooting, can possibly cause accidents.

This invention, in effect, extends the driver's ears to outside his vehicle. A microphone is to be mounted to receive sound outside the vehicle and then to present it, suitably amplified, to the driver it is connected to an audio amplifier and a speaker.

The microphone can be placed at appropriate positions on the outside of the vehicle, especially its rear offside, so as to supply an input signal to the audio amplifier from time to time. Thus all, or only a selected part, of the external noise environment can be transmitted to the speaker in the vehicle for the driver's information and safety.

A particular embodiment of the invention will now be described with reference to the accompanying drawings wherein:-

Figure 1 is a perspective view showing the installation of the embodiment on a vehicle and

Figure 2 is a circuit diagram.

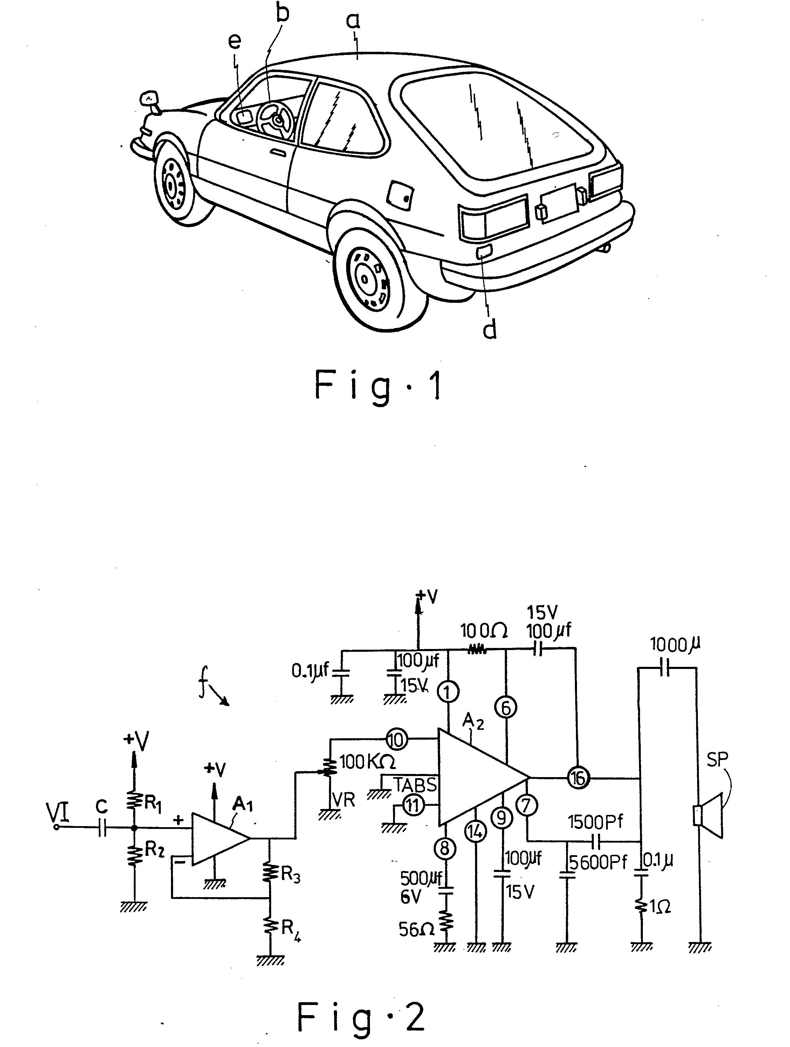

Figure 1 shows the external appearance of a motor car a with the embodiment installed. The cab or passenger compartment of the vehicle b contains an audio amplifier f and speaker e. A microphone d is mounted at the rear offside of the vehicle, outside the cab: and further microphones may be provided at suitable places.

Figure 2 shows an audio amplifier circuit wherein $A_1$ and $A_2$ are operational amplifiers which are integral circuits respectively. The former can be type CA 324 and the latter CA810Q or CA810QM. The values of the capacitors and resistors around $A_2$ show optima obtained by experiment. A sound wave converted to an electrical signal by the microphone d, is fed from terminal VI. This signal is adequately amplified by the first amplifier $A_1$ and then by power amplifier $A_2$. The detailed principle of operation $A_1$ and $A_2$, is well known. VR is an analog variable resistor (onto which a sectionalized switch may be connected to alter it into a sectionalized digital variable resistor) for adjusting the signal output from $A_1$ which is applied to $A_2$.

Therefore the output from the speaker $\underline{e}$
(here designated SP) after amplification by $A_2$
can be adjusted optionally. This allows for ordinary
noise (other than vehicle horns, noise from an
emergency brake etc.) to be suppressed from emission
by the speaker while sharper or louder noises (e.g.
horns and noise of emergency brakes) are projected
from the said speaker. Of course, the ordinary
facility of simple volume control can be made
available too.

In conclusion, the effectiveness and
characteristics of the invention are summarized as
follows:

(1)     It is an electronic circuit wherein the
amplifier is merely one or more integral circuits.
Its compactness means that its installation in a
vehicle will not affect the appearance of the inside
of said vehicle and no problem arises from the space
it occupies;

(2)     The microphone can be installed at the rear of
a vehicle or any other appropriate position(s) which
do not affect the appearance.

(3)     Use of the invention will greatly improve
driving safety which in turn will be an important
contribution to the protection of life and property.

- 4 -

CLAIMS

1). A device for giving audible warning within a first vehicle of the presence of another vehicle in the vicinity characterised in that a microphone (d) for receiving sound from the other vehicle is mounted on the outside of the first vehicle (a) and is connected to the input of an audio-frequency amplifier (f), and a speaker (e) fed by the output of the amplifier (f).

2). A device according to Claim 1 wherein the amplifier (f) includes biasing means (VR) for passing through a second stage $(A_2)$ of the amplifier only signals derived from sounds of over a predetermined level.

3). A device according to Claim 2 wherein the biasing means (VR) is a variable resistor.

4). A device according to any one of the preceding claims which is mounted on a said first vehicle (a) having a closed body within which is the driving seat of the vehicle, the speaker (e) being within the body and directed towards the driving seat.

5). A device according to Claim 4 wherein the microphone is mounted on the rear offside of the vehicle (a).

Fig·1

Fig·2

## EUROPEAN SEARCH REPORT

### European Patent Office

| DOCUMENTS CONSIDERED TO·BE RELEVANT | | | CLASSIFICATION OF THE APPLICATION (Int. Cl.3) |
|---|---|---|---|
| Category | Citation of document with indication, where appropriate, of relevant passages | Relevant to claim | |
| X | DE - A - 1 943 194 (VEHICLE SAFETY SYSTEM, INC.) <br> * claims; page 1, line 13 to page 2, line 13; page 9, line 16 to page 10, line 15; page 11, lines 6 to 14; pages 14 to 18; fig. 19 * <br> -- <br> DE - A - 1 555 678 (O.F. HIPKINS) <br> * claim 3; fig. 4; fig. 1 * <br> ---- | 1,2,4 <br><br><br><br><br><br> 3,5 | G 08 B 3/10 <br> B 60 Q 9/00 |

**CLASSIFICATION OF THE APPLICATION (Int. Cl.3)**

G 08 B 3/10
B 60 Q 9/00

**TECHNICAL FIELDS SEARCHED (Int.Cl.3)**

B 60 Q 9/00
G 08 B 3/10
G 08 B 21/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family.
corresponding document

| | The present search report has been drawn up for all claims | | |
|---|---|---|---|
| Place of search | Date of completion of the search | Examiner | |
| Berlin | 24-09-1979 | BEYER | |

EPO Form 1503.1  06.78